# EUROPÄISCHE PATENTSCHRIFT

(11) **EP 2 455 725 B1**
(45) Veröffentlichungstag und Bekanntmachung des Hinweises auf die Patenterteilung: **02.12.2020**
(21) Anmeldenummer: 11186002.9
(22) Anmeldetag: 20.10.2011
(51) Int. Cl.: G01F 1/684, G01F 15/18, G01K 1/08

(54) **Gehäuse eines Temperatursensors, insbesondere eines thermischen Durchflussmessgeräts**
Housing of a temperature sensor, in particular a thermal flow measuring device
Boîtier d'un capteur de température, notamment d'un débitmètre thermique

(30) Priorität: 22.11.2010 DE 102010061731
(43) Veröffentlichungstag der Anmeldung: 23.05.2012
(73) Patentinhaber: Endress + Hauser Flowtec AG, 4153 Reinach (CH)
(72) Erfinder: Pfau, Axel, 4144 Arlesheim (CH); Iselt, Torsten, 87435 Kempten (DE); Boguhn, Dirk, 81245 München (DE)
(74) Vertreter: Andres, Angelika Maria

(56) Entgegenhaltungen:
- EP-A2- 1 965 185
- CH-A5- 647 867
- DE-A1- 3 338 610
- DE-A1-102005 000 209
- DE-U1- 9 420 768
- US-A1- 2005 175 067
- US-A1- 2005 223 828

## Beschreibung

Die vorliegende Erfindung betrifft ein Gehäuse eines Temperatursensors, insbesondere eines thermischen Durchflussmessgeräts, welches zumindest eine Hülse mit einem ersten Endabschnitt, einem zweiten Endabschnitt und einer Längsachse, welche sich zwischen dem ersten und zweiten Endabschnitt erstreckt, umfasst, wobei die Hülse eine Außenseite aufweist, welche das Gehäuse zur Umwelt hin begrenzt und wobei im Bereich des ersten Endabschnitts der Hülse ein Temperaturfühlerelement, insbesondere ein Widerstandsthermometer, angeordnet ist.

Aus dem Stand der Technik bekannt sind Temperatursensoren für die industrielle Prozesstechnik. Ihr Aufbau ist dem von thermischen Durchflussmessgeräten ähnlich, mit dem Unterschied, dass herkömmliche thermische Durchflussmessgeräte üblicherweise zwei möglichst gleichartig ausgestaltete Temperatursensoren verwenden, die in, meist stiftförmigen, Metallhülsen, so genannten Stingers oder Prongs, angeordnet sind und die in thermischem Kontakt mit dem durch ein Messrohr oder durch die Rohrleitung strömenden Medium sind. Meist sind sie in das Medium eingetaucht. Für die industrielle Anwendung sind beide Temperatursensoren üblicherweise in ein Messrohr eingebaut; die Temperatursensoren können aber auch direkt in der Rohrleitung montiert sein. Einer der beiden Temperatursensoren ist ein sog. aktiver Temperatursensor, der mittels einer Heizeinheit beheizt wird. Als Heizeinheit ist entweder eine zusätzliche Widerstandsheizung vorgesehen, oder bei dem Temperatursensor selbst handelt es sich um ein Widerstandselement, z.B. um einen RTD-(Resistance Temperature Device) Sensor, der durch Umsetzung einer elektrischen Leistung, z.B. durch eine entsprechende Variation des Messstroms, erwärmt wird. Bei dem zweiten Temperatursensor handelt es sich um einen sog. passiven Temperatursensor: Er misst die Temperatur des Mediums bei möglichst geringer Eigenerwärmung durch den Messstrom.

Die DE 94 20 768 U1 weist eine Hülse mit einem endständigen Flansch 15 auf, welcher mit einem zweiten Flansch 20 verschweißt sein kann (S.3, 3.Absatz). Dieser Flansch und die dazu gehörige Kante befindet sich allerdings im Gehäuse des Sensors.

Die CH 647 867 A5 offenbart einen in einem Schutzrohr angeordneten Messeinsatz. Der Endbereich des Schutzrohrs ist als Flansch ausgeformt. Auch bei dieser Konstruktion ist der Flansch allerdings innerhalb des Gehäuses angeordnet L

Die gattungsgemäße EP 1 965 185 A2 offenbart in den Fig. 14 und 18 eine auf einen Schaft 104 aufgeschobene Hülse 103, welche einen von der Hülsenwandung hervorstehende Kante aufweist. Die D3 offenbart zudem eine Hülse 3 und einen Schaft, ohne dass die Hülse eine hervorstehende Kante aufweist. In letzterem Ausführungsbeispiel ist die Hülse und der Schaft miteinander verschweißt.

Bisher wurden hauptsächlich RTD-Elemente mit wendelförmig gewickelten Platindrähten in thermischen Durchflussmessgeräten eingesetzt. Bei Dünnfilm-Widerstandsthermometern (TF-RTDs) wird herkömmlicherweise eine mäanderförmige Platinschicht auf ein Substrat aufgedampft. Darüber wird eine weitere Glasschicht zum Schutz der Platinschicht aufgebracht. Der Querschnitt der Dünnfilm-Widerstandsthermometer ist im Unterschied zu den, einen runden Querschnitt aufweisenden RTD-Elementen, rechteckig. Die Wärmeübertragung in das Widerstandselement und/oder aus dem Widerstandselement erfolgt demnach über zwei gegenüberliegende Oberflächen, welche zusammen einen Großteil der Gesamtoberfläche eines Dünnfilm-Widerstandsthermometers ausmachen.

Die Aufgabe der Erfindung besteht darin, ein Gehäuse für einen Temperatursensor, insbesondere der industriellen Prozessmesstechnik, vorzuschlagen, welches einfach herzustellen ist.

Die Aufgabe wird gelöst durch die Gegenstände der unabhängigen Ansprüche 1 und 9. Weiterbildungen und Ausgestaltungen der Erfindung finden sich in den Merkmalen der jeweils abhängigen Ansprüche wieder.

Das erfindungsgemäße Gehäuse des Temperatursensors, insbesondere eines thermischen Durchflussmessgeräts, umfasst zumindest eine Hülse mit einem ersten Endabschnitt, einem zweiten Endabschnitt und einer Längsachse, welche sich zwischen dem ersten und zweiten Endabschnitt erstreckt. Die Hülse weist eine Außenseite auf, welche das Gehäuse zur Umwelt hin begrenzt. In ihr ist im Bereich des ersten Endabschnitts ein Temperaturfühlerelement, insbesondere ein Widerstandsthermometer, angeordnet.

Die Hülse weist im Bereich des zweiten Endabschnitts eine die Außenseite der Hülse abschließende Kante auf, deren Punkte jeweils einen Abstand zu der Längsachse der Hülse aufweisen, welcher jeweilige Abstand größer ist, als der Abstand aller weiteren Punkte der Außenseite der Hülse zur Längsachse der Hülse, welche in einer gemeinsamen Ebene mit der Längsachse der Hülse und mit dem jeweiligen Punkt der Kante liegen. Darüber hinaus ist der genannte Abstand eines Punkts der Kante, im nachfolgenden als erster Punkt bezeichnet, so bemessen, dass die Hülse an der Kante mit einem Sensorhalter mittels eines Lasers stoffschlüssig verschweißbar ist. Neben dem Abstand des ersten Punkts der Kante zur übrigen Außenseite der Hülse, ist auch die Länge der Hülse von Bedeutung. Der Laserstrahl zum Verschweißen muss während der Herstellung an der Hülse vorbeigeführt werden. Die Masse der Hülse sind entsprechend vom Öffnungswinkel des Laserstrahl abhängig.

Die Hülse ist an der die Außenseite der Hülse abschließenden Kante mit einem Sensorhalter stoffschlüssig verbunden.

Insbesondere ist der genannte Abstand eines ersten Punkts der Kante um mindestens 0,2 mm größer, als der Abstand eines beliebigen weiteren, zweiten Punkts der Außenseite der Hülse zur Längsachse der Hülse, welcher in einer gedachten gemeinsamen Ebene mit der Längsachse der Hülse und mit dem ersten Punkt der Kante liegt und welcher jeweils einen auf die Längsachse der Hülse projizierten Abstand zum ersten Punkt der Kante von mindestens 0,2 mm des Abstands des ersten Punkts der Kante zur Längsachse in Richtung des ersten Endabschnitts der Hülse aufweist. Insbesondere weist jeder erste Punkt der die Außenseite der Hülse abschließenden Kante, im Bereich des zweiten Endabschnitts der Hülse, einen Abstand zu der Längsachse der Hülse auf, welcher um mindestens 1,5 mm größer ist, als der Abstand aller zweiten Punkte der Außenseite der Hülse zur Längsachse der Hülse, welche in einer gemeinsamen Ebene mit der Längsachse der Hülse und mit dem ersten Punkt der Kante liegen und welche jeweils einen auf die Längsachse der Hülse projizierten Abstand zum ersten Punkt der Kante von mindestens 1,5 mm des Abstands des ersten Punkts der Kante zur Längsachse in Richtung des ersten Endabschnitts der Hülse aufweisen.

Um Hygienevorschriften zu genügen ist der genannte Abstand eines ersten Punkts der Kante um mindestens 3 mm größer, als der Abstand eines beliebigen weiteren, zweiten Punkts der Außenseite der Hülse zur Längsachse der Hülse, welcher in einer gedachten gemeinsamen Ebene mit der Längsachse der Hülse und mit dem ersten Punkt der Kante liegt und welcher jeweils einen auf die Längsachse der Hülse projizierten Abstand zum ersten Punkt der Kante von mindestens 3 mm des Abstands des ersten Punkts der Kante zur Längsachse in Richtung des ersten Endabschnitts der Hülse aufweist.

Gemäß einer Weiterbildung der Erfindung ist die Funktion des Abstands zwischen den Punkten der Außenseite der Hülse, welche zwischen einem ersten Punkt der Kante und einem zweiten Punkt der Außenseite der Hülse liegen, ausgehend von dem zweiten Punkt der Außenseite der Hülse, welcher in einer gemeinsamen Ebene mit der Längsachse der Hülse und mit dem ersten Punkt der Kante liegt und welcher einen auf die Längsachse der Hülse projizierten Abstand zum ersten Punkt der Kante von mindestens 0,2 mm des Abstands des ersten Punkts der Kante zur Längsachse in Richtung des ersten Endabschnitts der Hülse aufweist, bis zu der die Außenseite der Hülse abschließenden Kante im Bereich des zweiten Endabschnitts der Hülse, monoton steigend, insbesondere streng monoton steigend. In einem Ausführungsbeispiel ist diese Funktion darüber hinaus stetig.

Gemäß einer Weiterbildung der Erfindung weist die Funktion des Abstands zwischen den Punkten der Außenseite der Hülse, welche zwischen einem ersten Punkt der Kante und einem zweiten Punkt der Außenseite der Hülse liegen, ausgehend von dem zweiten Punkt der Außenseite der Hülse, welcher in einer gemeinsamen Ebene mit der Längsachse der Hülse und mit dem ersten Punkt der Kante liegt und welcher einen auf die Längsachse der Hülse projizierten Abstand zum ersten Punkt der Kante von mindestens 1,5 mm, insbesondere mindestens 3 mm, des Abstands des ersten Punkts der Kante zur Längsachse in Richtung des ersten Endabschnitts der Hülse aufweist, eine Ableitung im ersten Punkt der Kante der Hülse auf, mit einer Steigung größer oder gleich eins. In einem Ausführungsbeispiel geht die Steigung gegen unendlich.

Wird die Außenseite als Funktionsgraph der Funktion des Abstands zwischen den Punkten der Außenseite der Hülse und der Längsachse der Hülse betrachtet, kann die Kante eine Unstetigkeitsstelle darstellen, in der die Funktion nicht differenzierbar ist. Dennoch weist die Funktion dann eine so genannte links bzw. rechtsseitige Ableitung in jedem Punkt der Kante auf. Die Links-Tangente bzw. die Rechts-Tangente in jedem Punkt der Kante schließt dann weiterbildungsgemäß einen Winkel mit der Längsachse der Hülse ein, welcher mindestens 45° groß ist. Insbesondere ist dieser Winkel größer 60°. In einem Ausführungsbeispiel beträgt dieser Winkel 90°, d.h. die Steigung der Ableitung geht gegen unendlich.

Gemäß einer Weiterbildung der Erfindung weist die Außenseite der Hülse im Bereich des zweiten Endabschnitts bis zur die Außenseite der Hülse abschließenden Kante einen Radius von zumindest 2 mm, insbesondere von zumindest 5 mm, auf. Die Hülse weist also eine Krempe auf, welche insbesondere rund ausgeführt ist. Um die Anforderungen für den Einsatz in hygienischen Prozessen zu erfüllen, muss die Krempe einen größtmöglichen Radius aufweisen, beispielsweise auch größer als 6,5 mm.

Gemäß einer Weiterbildung der Erfindung weist die Hülse vom ersten Endabschnitt bis zum zweiten Endabschnitt einen im Wesentlichen um die Längsachse der Hülse symmetrischen, insbesondere rotationssymmetrischen Querschnitt auf. Die Hülse ist beispielsweise stiftförmig ausgeformt, mit einem näherungsweise kreisrunden Querschnitt. Alternativ kann die Hülse auch einen ovalen Querschnitt aufweisen.

Gemäß einer Weiterbildung der Erfindung ist die Hülse an den Sensorhalter angeschweißt, insbesondere mittels eines Laserschweißverfahren. Die Kante der Krempe der Hülse muss mindestens soweit überstehen, dass später mit einem Laserstrahl definierten Strahldurchmessers, z.B. 1 mm, noch senkrecht von oben die Ringnaht zwischen Hülse und Sensorhalter geschweißt werden kann.

Gemäß einer Weiterbildung der Erfindung ist die Funktion des Abstands von zumindest einem Abschnitt einer gemeinsamen Schnittkante der Außenseite der Hülse und einer Außenseite des Sensorhalters, welche Außenseite des Sensorhalters das Gehäuse zur Umwelt hin begrenzt, welche Schnittkante in einer gemeinsamen Schnittebenen mit der Längsachse der Hülse liegt, zur Längsachse der Hülse, welcher Abschnitt sich zumindest über jeweils einen Teilabschnitt der Hülse und des Sensorhalters erstreckt, monoton, wobei die Länge jedes Teilabschnitts mindestens 0,5 mm beträgt, insbesondere mindestens 2,5 mm, insbesondere mindestens 5 mm. In einem Ausführungsbeispiel der Erfindung ist die genannte Funktion ausgehend vom ersten Endabschnitt der Hülse streng monoton steigend.

Die Fügestelle, also insbesondere die Schweißnaht, zwischen Sensorhalter und Hülse ist glatt und oberflächlich nahtfrei, beispielsweise ist die Schweißnaht poliert, insbesondere elektropoliert.

Bei einer Weiterbildung der Erfindung ist die Hülse im Bereich des zweiten Endabschnitts mit einem Boden, welcher insbesondere senkrecht zur Längsachse zur Hülse steht, verschlossen. Auf dem Boden kann dann der Temperaturfühler, insbesondere ein Widerstands-Thermometer, angeordnet sein, insbesondere ist der Temperaturfühler, insbesondere das Widerstands-Thermometer, direkt oder indirekt mit dem Boden verbunden. Der Boden kann auch ein Boden einer topfförmigen Kappe sein oder der Boden eines in die Hülse eingeführten Stopfens. Bekannt geworden sind des weiteren Distanzstücke zwischen Hülse und Temperaturfühler, welche in die Hülse eingesetzt sind.

Wird das Gehäuse für ein thermisches Durchflussmessgerät mit zwei Temperatursensoren verwendet, weist der erste Temperatursensor ein erstes erfindungsgemäßes Gehäuse auf und der zweite Temperatursensor weist ein zweites erfindungsgemäßes Gehäuse auf, wobei eine erste Hülse des ersten Gehäuses und eine zweite Hülse des zweiten Gehäuses an einem gemeinsamen Sensorhalter befestigt sind. Gemäß einer Ausgestaltung weist die erste Hülse eine Form und/oder Größe auf, welche von einer Form und/oder Größe der zweiten Hülse verschieden ist, beispielsweise unterscheiden sich deren Querschnittsflächen.

Ein erfindungsgemäßes thermisches Durchflussmessgerät wird hergestellt, indem die Hülse mit dem Sensorhalter mittels eines Laserschweißverfahrens stoffschlüssig verbunden wird. Anschließend wird die Schweißnaht auf der Außenseite des Gehäuses poliert, insbesondere elektropoliert.

Die Hülse wird mit einem Sensorhalter mittels eines Lasers stoffschlüssig verschweißt, wobei die Hülse mit der die Außenseite der Hülse abschließenden Kante im Bereich des zweiten Endabschnitts der Hülse so hergestellt wird, dass die Kante einen Abstand zur übrigen Außenseite der Hülse aufweist, welcher so bemessen wird, dass die Hülse an der Kante mit dem Sensorhalter mittels des Lasers stoffschlüssig verschweißbar ist. Insbesondere weist die Hülse eine vorgegebene Länge auf, welche ebenfalls so bemessen wird, dass die Hülse an der Kante mit dem Sensorhalter mittels des Lasers stoffschlüssig verschweißbar ist.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.

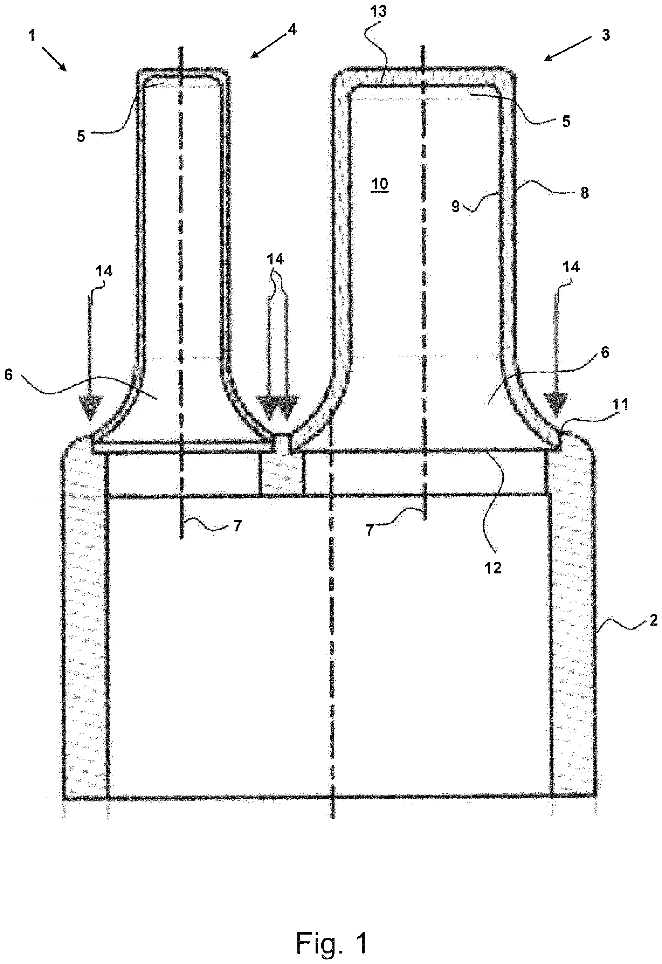

Fig. 1 zeigt ein erfindungsgemäßes Gehäuse eines thermischen Durchflussgeräts im Längsschnitt.

In Fig. 1 ist ein erfindungsgemäßes Gehäuse 1 eines thermischen Durchflussgeräts im Längsschnitt dargestellt. Das Gehäuse weist einen Sensorhalter 2 und zwei an diesem befestigten Hülsen 3 und 4 auf. Jede der beiden Hülsen 3 und 4 weist jeweils einen ersten Endabschnitt 5, einen zweiten Endabschnitt 6 und einer Längsachse 7 auf, wobei sich die Längsachse zwischen dem ersten und zweiten Endabschnitt erstreckt. Hier nicht dargestellt ist, dass in den Hülsen 3 und 4 jeweils im Bereich des jeweiligen ersten Endabschnitts 5 ein Temperaturfühlerelement, beispielsweise ein Dünnschicht-Widerstandsthermometer, angeordnet ist. Im nachfolgenden wird lediglich die erste Hülse 3 detailliert beschrieben, da die Hülsen 3 und 4, bis auf ihre Größe durch unterschiedliche Abmessungen, insbesondere ihre unterschiedlichen Wandstärken und ihre unterschiedlich großen Querschnittsflächen, obwohl beide Hülsen 3 und 4 einen im Wesentlichen kreisförmigen und damit einen um die Längsachse 7 der Hülse rotationssymmetrischen Querschnitt aufweisen, alle erfindungsgemäßen gleichen Merkmale aufweisen.

Die erste Hülse 3 weist eine Außenseite 8 auf, welche das Gehäuse zur Umwelt hin begrenzt. Neben der Außenseite 8 weist die Hülse 3 selbstverständlich auch eine Innenseite 9 auf, welche den Innenraum 10 der Hülse 3 begrenzt. Im Innenraum 10 sind die Temperaturfühler angeordnet, durch die Hülse 3 geschützt. Die Hülse 3 hat eine vorgegebene Wandstärke zwischen Innenseite 9 und Außenseite 8. Die Außenseite 8 der Hülse 3 wird im Bereich des zweiten Endabschnitts 6 von einer Kante 11 abgeschlossen. Auch die Innenseite 9 der Hülse 3 wird von einer Kante 12 im Bereich des zweiten Endabschnitts 6 abgeschlossen. Beide Kanten 11 und 12 werden durch die Wandstärke der Hülse 3 voneinander getrennt. Die Wandstärke der Hülse 3 zwischen den Kanten 11 und 12 legt eine hier ringförmige Fläche fest, welche hier in diesem Ausführungsbeispiel in direktem Kontakt mit dem Sensorhalter 2 steht. Die ringförmige Fläche ist die Mantelfläche eines Zylinders mit einer Längsachse koaxial zur Längsachse 7 der Hülse 3. Diese hier ringförmige Fläche kann in anderen Ausführungen der Erfindung beispielsweise die Mantelfläche eines Kegels sein, oder sie verschwindet, wenn die Wandstärke zwischen den Kanten 11 und 12 Null ist und die Kanten 11 und 12 zusammenfallen. Die Kante 12 begrenzt hier nicht nur den Innenraum der Hülse 3 sondern gleichzeitig bildet sie eine zweite Stirnseite der Hülse 3. Deren erste Stirnseite wird hier durch den Boden 13 der Hülse 3 im Bereich des ersten Endabschnitts 5 gebildet.

Die Hülse 3 ist zumindest an ihrer Kante 11 mit dem Sensorhalter 2 stoffschlüssig verbunden. Hier ist sie über ihre gesamte Wandstärke von der Kante 11 bis zur Kante 12 mit dem Sensorhalter verschweißt. Dazu weist jeder Punkt der die Außenseite 8 der Hülse 3 abschließenden Kante 11, im Bereich des zweiten Endabschnitts 6 der Hülse 3, einen Abstand zu der Längsachse 7 der Hülse 3 auf, welcher um mindestens 0,2 mm größer ist, als der Abstand aller weiteren Punkte der Außenseite 8 der Hülse 3 zur Längsachse 7 der Hülse 3, welche in einer gemeinsamen, gedachten Ebene, hier die Zeichenebene, mit der Längsachse 7 der Hülse 3 und mit dem entsprechenden Punkt der Kante 11 liegen und welche jeweils einen auf die Längsachse 7 der Hülse 3 projizierten Abstand zum entsprechenden Punkt der Kante 11 von mindestens 0,2 mm des Abstands des entsprechenden Punkts der Kante 11 zur Längsachse 7 in Richtung des ersten Endabschnitts 5 der Hülse 3 aufweisen. Die Außenseite 8 der Hülse 3 weist hier im Bereich des zweiten Endabschnitts 6 einen Radius eines Teilkreises von 6,5 mm auf. Das bedeutet auch, dass jeder Längsschnitt der Außenseite 8 im Bereich des zweiten Endabschnitts 6, insbesondere zwischen der Kante 11 und den Punkten der Außenseite der Hülse mit einem auf die Längsachse 7 der Hülse 3 projizierten Abstand zur der Kante 11 von höchstens 0,2 mm in Richtung des ersten Endabschnitts 5 der Hülse 3, konkav ist. Um diese Bedingung zu erfüllen muss jedoch kein klassischer Radius vorliegen.

Wird der Abstand der Punkte der Außenseite 8 des gezeigten Längsschnitts der Hülse 3 zur Längsachse 7 der Hülse 3 als mathematische Funktion beschrieben, so ist diese Funktion in diesem Beispiel nicht differenzierbar an der Stelle der Kante 11. Sehr wohl gibt es aber eine Rechts- bzw. Links-Tangente an der Stelle der Kante 11. Diese Tangente, von dem ersten Endabschnitt 5 aus abgeleitet, hier und jetzt willkürlich als Rechts-Tangente bezeichnet, schließt hier einen Winkel größer als 60° mit der Längsachse 7 der Hülse 3 ein. Dieser Winkel liegt erfindungsgemäß zwischen 45° und 90°. Wie bereits beschrieben würde die Links-Tangente parallel zur Längsachse 7 der Hülse 3 verlaufen.

Des Weiteren ist die eben beschriebene Funktion des Abstands der Punkte der Außenseite 8 der Hülse 3 zur Längsachse 7 der Hülse 3 vom ersten Endabschnitt 5 bis zur Kante 11 monoton, hier sogar monoton steigend und im Bereich des zweiten Endabschnitts 6, und insbesondere zwischen der Kante 11 und den Punkten der Außenseite der Hülse mit einem auf die Längsachse 7 der Hülse 3 projizierten Abstand zur der Kante 11 von höchstens 0,2 mm in Richtung des ersten Endabschnitts 5 der Hülse 3, streng monoton steigend. Die Außenseite 8 der Hülse 3 weist damit an der Kante 11 den größten Querschnitt senkrecht auf die Längsachse 7 der Hülse 3 auf. Gleiches kann für die Innenseite 9 gelten. Hier sind zwar die Querschnittsflächen, begrenzt durch die Kanten 11 und 12 der Innen- und Außenseite 9 und 8 der Hülse 3 in Form und Größe gleich, diese können in anderen Ausgestaltungsbeispielen jedoch voneinander abweichen.

Durch diese besondere Bauart ist es möglich, die Hülse 3 mittels eines Laserschweißverfahrens an den Sensorhalter 2 anzuschweißen. Die Pfeile 14 stellen die Laserstrahlen dar. Der Energieeintrag in das die Schweißnaht umgebende Material der Hülse 3 und des Sensorhalters 2 ist am größten, wenn die Laserstrahlen in einem Winkel möglichst nahe an oder gleich 90° auf die betreffenden Flächen auftreffen. Dies ist hier der Fall bei parallel zu den Längsachsen der Hülsen 3 und 4 verlaufenden Laserstrahlen. Dieser Verlauf bringt den weiteren Vorteil mit sich, dass bei zwei oder mehreren und eng beieinander liegenden Hülsen 3 und 4, keine Hülse der Befestigung einer anderen im Weg steht, bzw. dass der Laserstrahl nicht aufwendig justiert werden muss. Um diese axiale Laserschweißung durchführen zu können, weisen die Punkte der Kante 11 den größten Abstand der Außenseite 8 der Hülse 3 zu der Längsachse 7 der Hülse 3 auf und die weiteren, oben beschriebenen Eigenschaften.

Zum Herstellen werden zunächst die Hülsen 3 und 4 und der Sensorhalter 2 gefertigt. Die Hülsen 3 und 4 werden in die entsprechenden Bohrungen im Sensorhalter 2 eingesetzt und hier mittels ihrer durch die Wandstärke zwischen den Kanten 11 und 12 gebildeten Ringflächen am Sensorhalter 2 ausgerichtet. Anschließend werden sie an diesen Flächen oder lediglich an der Kante 11 mit dem Sensorhalter stoffschlüssig verbunden. Damit Hygienevorschriften der industriellen Prozesstechnik entsprochen werden kann, werden die Schweißnähte nach dem Schweißen noch einmal mechanisch bearbeitet. Sie werden poliert, insbesondere elektropoliert. Damit entsteht eine glatte Oberfläche. Hier besteht ein weiterer Vorteil der Erfindung, da diese mechanische Nachbearbeitung sehr einfach und kostengünstig durchzuführen ist. Es entsteht eine "nahtfreie" Oberfläche. Die Funktion des Abstands von zumindest einem Teilabschnitt der Außenseite 8 der Hülse 3 und einem Teilabschnitt der Außenseite des Sensorhalters, welche in einer gemeinsamen Schnittebenen mit der Längsachse 7 der Hülse 3 liegen und welche zusammen einen stetigen Abschnitt der Funktion bilden, zur Längsachse 7 der Hülse 3 ist monoton, wobei die Länge jedes Teilabschnitts mindestens 0,5 mm beträgt.

### Bezugszeichenliste

- 1: Durchflussmessgerät
- 2: Sensorhalter
- 3: Erste Hülse
- 4: Zweite Hülse
- 5: Erster Hülsenendabschnitt
- 6: Zweiter Hülsenendabschnitt
- 7: Längsachse der Hülse
- 8: Außenseite der Hülse
- 9: Innenseite der Hülse
- 10: Innenraum der Hülse
- 11: Erste Kante der Hülse
- 12: Zweite Kante der Hülse
- 13: Boden der Hülse
- 14: Laserstrahlen

## Patentansprüche

1. Gehäuse eines Temperatursensors, welches einen Sensorhalter (2) und zumindest eine Hülse (3, 4) mit einem ersten Endabschnitt (5), einem zweiten Endabschnitt (6) und einer Längsachse (7) umfasst, wobei sich die Längsachse (7) zwischen dem ersten und zweiten Endabschnitt (5 und 6) erstreckt, in welcher Hülse (3, 4) im Bereich des ersten Endabschnitts (5) ein Temperaturfühlerelement angeordnet ist und welche Hülse (3, 4) eine Außenseite (8) aufweist, welche das Gehäuse zur Umwelt hin begrenzt, wobei jeder erste Punkt einer die Außenseite (8) der Hülse (3,4) abschließenden Kante (11), im Bereich des zweiten Endabschnitts (6) der Hülse (3, 4), einen Abstand zu der Längsachse (7) der Hülse (3, 4) aufweist, welcher um mindestens 0,2 mm größer ist, als der Abstand aller zweiten Punkte der Außenseite (8) der Hülse (3, 4) zur Längsachse (7) der Hülse (3, 4) welche in einer gemeinsamen Ebene mit der Längsachse (7) der Hülse (3, 4) und mit dem ersten Punkt der Kante (11) liegen und welche jeweils einen auf die Längsachse (7) der Hülse (3, 4) projizierten Abstand zum ersten Punkt der Kante (11) von mindestens 0,2 mm des Abstands des ersten Punkts der Kante (11) zur Längsachse (7) in Richtung des ersten Endabschnitts (5) der Hülse (3 4) aufweisen, **dadurch gekennzeichnet, dass** die Hülse (3, 4) an der die Außenseite (8) der Hülse (3, 4) abschließenden Kante (11) mit dem Sensorhalter (2) stoffschlüssig verbunden ist.

2. Gehäuse eines Temperatursensors nach Anspruch 1, **dadurch gekennzeichnet, dass** jeder Längsschnitt der Außenseite (5) der Hülse (3, 4), welcher in einer Ebene mit der Längsachse (7) der Hülse (3, 4) liegt, im Bereich des zweiten Endabschnitts (6) konkav ist.

3. Gehäuse eines Temperatursensors nach Anspruch 1 oder 2, **dadurch gekennzeichnet,**
**dass** die Außenseite (8) der Hülse (3, 4) im Bereich des zweiten Endabschnitts (6) bis zur die Außenseite (8) der Hülse (3, 4) abschließenden Kante (11) einen Radius von zumindest 2 mm aufweist.

4. Gehäuse eines Temperatursensors nach einem der Ansprüche 1 bis 3, **dadurch gekennzeichnet,**
**dass** die Hülse (3, 4) einen im Wesentlichen um die Längsachse (7) der Hülse (3, 4) rotationssymmetrischen Querschnitt aufweist.

5. Gehäuse eines Temperatursensors nach einem der vorigen Ansprüche, **dadurch gekennzeichnet,**
**dass** die Funktion des Abstands von zumindest einem Abschnitt einer gemeinsamen Schnittkante der Außenseite (8) der Hülse (3, 4) und einer Außenseite des Sensorhalters (2) in einer gemeinsamen Schnittebenen mit der Längsachse der Hülse zur Längsachse (7) der Hülse (3, 4), welcher sich zumindest über jeweils einen Teilabschnitt der Hülse und des Sensorhalters (2) erstreckt, monoton ist, wobei die Länge jedes Teilabschnitts mindestens 0,5 mm beträgt.

6. Temperatursensor mit einem Gehäuse nach einem der vorigen Ansprüche, **dadurch gekennzeichnet,**
**dass** die Hülse (3, 4) an dem zweiten Endabschnitt mit einem Boden verschlossen ist, mit welchem der Temperaturfühler verbunden ist.

7. Thermisches Durchflussmessgerät,
**dadurch gekennzeichnet,**
**dass** es einen ersten Temperatursensor und zumindest einen zweiten Temperatursensor aufweist, wobei der erste Temperatursensor ein erstes Gehäuse nach einem der Ansprüche 1 bis 6 aufweist und wobei der zweite Temperatursensor ein zweites Gehäuse nach einem der Ansprüche 1 bis 6 aufweist, wobei eine erste und eine zweite Hülse an einem Sensorhalter (2) befestigt sind.

8. Thermisches Durchflussmessgerät nach Anspruch 7,
**dadurch gekennzeichnet,**
**dass** die erste Hülse (3) eine Form und/oder Größe aufweist, welche von einer Form und/oder Größe der zweiten Hülse (4) verschieden ist.

9. Verfahren zum Herstellen eines thermischen Durchflussmessgeräts, mit einem Gehäuse nach einem der Ansprüche 1 bis 6, wobei die Hülse (3,4) mit dem Sensorhalter (2) mittels eines Lasers stoffschlüssig verschweißt wird.

10. Verfahren nach Anspruch 9, **dadurch gekennzeichnet, dass** die Schweißnaht auf der Außenseite (8) des Gehäuses poliert wird.

## Claims

1. Housing of a temperature sensor, which comprises a sensor holder (2) and at least a sleeve (3, 4) with a first end section (5), a second end section (6) and a longitudinal axis (7), wherein the longitudinal axis (7) extends between the first end section and the second end section (5 and 6), wherein a temperature sensing element is arranged in said sleeve (3, 4) in the area of the first end section (5), and wherein said sleeve (3, 4) has an outer surface (8), which delimits the housing in relation to the environment,
wherein each first point of an edge (11), which delimits the outer surface (8) of the sleeve (3, 4) in the area of the second end section (6) of the sleeve (3, 4), has a distance to the longitudinal axis (7) of the sleeve (3, 4), which is at least 0.2 mm greater than the distance of all the second points of the outer surface (8) of the sleeve (3, 4) to the longitudinal axis (7) of the sleeve (3, 4), said points being situated on a common plane with the longitudinal axis (7) of the sleeve (3, 4) and with the first point of the edge (11), and wherein said points each have a distance, projected onto the longitudinal axis (7) of the sleeve (3, 4), to the first point of the edge (11) of at least 0.2 mm of the distance of the first point of the edge (11) to the longitudinal axis (7) in the direction of the first end section (5) of the sleeve (3, 4),
**characterized in that**
the sleeve (3, 4) is connected, via substance-to-substance bonding, to the sensor holder (2)at the edge (11) delimiting the outer surface (8) of the sleeve (3, 4).

2. Housing of a temperature sensor as claimed in Claim 1,
**characterized in that**
each longitudinal section of the outer surface (5) of the sleeve (3, 4), which is located on a plane with the longitudinal axis (7) of the sleeve (3, 4), is concave in the area of the second end section (6).

3. Housing of a temperature sensor as claimed in Claim 1 or 2,
**characterized in that**
the outer surface (8) of the sleeve (3, 4) has a radius of at least 2 mm in the area of the second end section (6) up to the edge (11) that delimits the outer surface (8) of the sleeve (3, 4).

4. Housing of a temperature sensor as claimed in one of the Claims 1 to 3, **characterized in that**
the sleeve (3, 4) has a cross-section that is essentially rotationally symmetric around the longitudinal axis (7) of the sleeve (3, 4).

5. Housing of a temperature sensor as claimed in one of the previous claims, **characterized in that**
the function of the distance from at least one section of a common cut edge of the outer surface (8) of the sleeve (3, 4) and an exterior surface of the sensor holder (2) is monotonic in a common section plane with the longitudinal axis of the sleeve in relation to the longitudinal axis (7) of the sleeve (3, 4), which extends at least over a sub-section of the sleeve and the sensor holder (2), wherein the length of each sub-section is at least 0.5 mm.

6. Temperature sensor with a housing as claimed in one of the previous claims, **characterized in that**
at the second end section, the sleeve (3, 4) is closed with a floor with which the temperature sensor is connected.

7. Thermal flowmeter,
**characterized in that**
it features a first temperature sensor and at least a second temperature sensor, wherein the first temperature sensor has a first housing as claimed in one of the Claims 1 to 6 and wherein the second temperature sensor has a second housing as claimed in one of the Claims 1 to 6, wherein a first and a second sleeve are secured to a sensor holder (2).

8. Thermal flowmeter as claimed in Claim 7,
**characterized in that**
the first sleeve (3) has a shape and/or a size that is different to a shape and/or size of the second sleeve (4).

9. Procedure for the fabrication of a thermal flowmeter, with a housing as claimed in one of the Claims 1 to 6, wherein the sleeve (3, 4) is welded, via a substance-to-substance connection, to the sensor holder (2) using a laser.

10. Procedure as claimed in Claim 9,
**characterized in that**
the weld seam is polished on the outer surface (8) of the housing.

## Revendications

1. Boîtier d'un capteur de température, lequel boîtier comprend un support de capteur (2) et au moins une douille (3, 4) avec une première partie terminale (5) et une deuxième partie terminale (6) et un axe longitudinal (7), l'axe longitudinal (7) s'étendant entre la première partie terminale et la deuxième partie terminale (5 et 6), douille (3, 4) dans laquelle est disposé un élément sensible à la température dans la zone de la première partie terminale (5), et laquelle douille (3, 4) présente une face extérieure (8), laquelle délimite le boîtier par rapport à l'environnement, chaque premier point d'un bord (11), qui délimite la surface extérieure (8) de la douille (3, 4) dans la zone de la deuxième partie terminale (6) de la douille (3, 4), présentant une distance par rapport à l'axe longitudinal (7) de la douille (3, 4), qui est supérieure d'au moins 0,2 mm à la distance de tous les deuxièmes points de la face extérieure (8) de la douille (3, 4) par rapport à l'axe longitudinal (7) de la douille (3, 4), lesquels points se situent dans un plan commun avec l'axe longitudinal (7) de la douille (3, 4) et avec le premier point du bord (11, et lesquels points présentent respectivement une distance, projetée sur l'axe longitudinal (7) de la douille (3, 4), par rapport au premier point du bord (11) d'au moins 0,2 mm de la distance du premier point du bord (11) par rapport à l'axe longitudinal (7) en direction de la première partie terminale (5) de la douille (3, 4),
**caractérisé**
**en ce que** la douille (3, 4) est reliée, sur le bord (11) délimitant la face extérieure (8) de la douille (3, 4), par liaison de matière avec le support de capteur (2).

2. Boîtier d'un capteur de température selon la revendication 1,
**caractérisé**
**en ce que** chaque coupe longitudinale de la face extérieure (5) de la douille (3, 4), laquelle se trouve dans un plan avec l'axe longitudinal (7) de la douille (3, 4), est concave dans la zone de la partie terminale (6).

3. Boîtier d'un capteur de température selon la revendication 1 ou 2,
**caractérisé**
**en ce que** la face extérieure (8) de la douille (3, 4) présente, dans la zone de la deuxième partie terminale (6) jusqu'au bord (11) délimitant la face extérieure (8) de la douille (3, 4), un rayon d'au moins 2 mm.

4. Boîtier d'un capteur de température selon la revendication 1 à 3,
**caractérisé**
**en ce que** la douille (3, 4) présente pour l'essentiel une section à symétrie de révolution autour de l'axe longitudinal (7) de la douille (3, 4).

5. Boîtier d'un capteur de température selon l'une des revendications précédentes, **caractérisé**
**en ce que** la fonction de la distance d'au moins une partie d'une arête de coupe commune de la face extérieure (8) de la douille (3, 4) et une face extérieure du support de capteur (2) est monotone dans un plan de coupe commun avec l'axe longitudinal de la douille par rapport à l'axe longitudinal (7) de la douille (3, 4), lequel axe s'étend au moins sur une section partielle de la douille et du support de capteur (2), la longueur de chaque section partielle étant d'au moins 0,5 mm.

6. Capteur de température avec un boîtier selon l'une des revendications précédentes,
**caractérisé**
**en ce que** la douille (3, 4) est fermée, au niveau de la deuxième partie terminale, avec un fond, avec lequel le capteur de température est relié.

7. Débitmètre thermique,
**caractérisé**
**en ce qu'**il comporte un premier capteur de température et au moins un deuxième capteur de température, le premier capteur de température présentant un premier boîtier selon l'une des revendications 1 à 6 et le deuxième capteur de température présentant un deuxième boîtier selon l'une des revendications 1 à 6, une première et une deuxième douille étant fixée sur un support de capteur (2).

8. Débitmètre thermique selon la revendication 7,
**caractérisé**
**en ce que** la première douille (3) présente une forme et/ou une taille, qui est/sont différente(s) de la forme et/ou de la taille de la deuxième douille (4).

9. Procédé destiné à la fabrication d'un débitmètre thermique, avec un boîtier selon l'une des revendications 1 à 6, la douille (3, 4) étant soudée par liaison de matière avec le support de capteur (2) au moyen d'un laser.

10. Procédé selon la revendication 9,
**caractérisé**
**en ce que** le cordon de soudure est poli sur la face extérieure (8) du boîtier.
